# FASCICULE DE BREVET EUROPEEN

(11) **EP 3 653 302 B1**
(45) Date de publication et mention de la délivrance du brevet: **09.06.2021**
(21) Numéro de dépôt: 19207804.6
(22) Date de dépôt: 07.11.2019
(51) Int. Cl.: B01L 3/00, G01N 33/49, G01F 13/00, G01N 1/18, G01N 1/34

(54) **DISPOSITIF DE PRÉPARATION D'UN VOLUME CALIBRÉ DE PLASMA SANGUIN**
VORRICHTUNG ZUR HERSTELLUNG EINES KALIBRIERTEN VOLUMENS VON BLUTPLASMA
PREPARATION DEVICE FOR A CALIBRATED VOLUME OF BLOOD PLASMA

(30) Priorité: 16.11.2018 FR 1860597
(43) Date de publication de la demande: 20.05.2020
(73) Titulaire: Commissariat à l'Énergie Atomique et aux Énergies Alternatives, 75015 Paris (FR)
(72) Inventeur: CUBIZOLLES, Myriam-Laure, 38054 Grenoble cedex (FR); ALESSIO, Manuel, 38054 Grenoble cedex (FR); DEN DULK, Remco, 38054 GRENOBLE CEDEX 09 (FR); REVOL-CAVALIER, Frédéric, 38054 GRENOBLE CEDEX 09 (FR)
(74) Mandataire: INNOV-GROUP

(56) Documents cités:
- EP-A1- 2 492 682
- CN-A- 105 879 936
- US-A1- 2002 019 058
- US-A1- 2018 200 677
- US-A1- 2018 275 058

## Description

### Domaine technique de l'invention

La présente invention se rapporte à un dispositif de préparation d'un volume calibré de plasma sanguin. L'invention concerne également un système de préparation d'un volume calibré de plasma sanguin et un procédé de commande mis en oeuvre pour obtenir un échantillon de volume calibré de plasma sanguin à partir d'un échantillon sanguin présent dans un dispositif de prélèvement connecté sur le dispositif de préparation du système.

### Etat de la technique

Beaucoup d'analyses médicales sont réalisées à partir du plasma sanguin plutôt que dans le sang total (Par exemple : mesure des taux hormonaux, des protéines, des glucides, lipides,...). Pour réaliser ces analyses, il est donc nécessaire de procéder à une séparation du plasma sanguin présent dans un échantillon sanguin.

La centrifugation est la technique la plus couramment utilisée pour extraire le plasma sanguin. Une centrifugation entre 1000g et 3000g sur une durée de 5mn à 15mn permet de séparer par densité les composants sanguins et de récupérer le plasma surnageant à partir de sang anti-coagulé.

Cette technique nécessite une centrifugeuse, ce qui est régulièrement le cas dans un environnement médicalisé mais devient délicat dès lors qu'on est sur le terrain opérationnel.

Pour des applications de terrain, des techniques de séparation du plasma sanguin sans centrifugation existent. Elles sont basées sur un principe de filtration, sur un principe de déplétion des globules sanguins par sédimentation, sur un principe d'agglutination des globules rouges, ou encore sur une combinaison de ces différentes méthodes. Les filtres utilisés pour la séparation du plasma sont généralement composés d'un gradient de porosité permettant de retenir les globules sanguins dans l'épaisseur du filtre en fonction de leur taille. Ce gradient permet le passage du plasma et limite l'occlusion du filtre.

Par ailleurs, il est connu que la détermination des concentrations des composants à doser dans le sang nécessite une connaissance du volume de plasma sur lequel l'analyse est réalisée. Pour cela, le volume d'analyse doit donc être connu et donc calibré. Dans un laboratoire d'analyse, après centrifugation du sang, un prélèvement calibré de plasma peut facilement être effectué (à la pipette, ou sur robot d'analyse). En revanche, dans un dispositif de type "laboratoire sur puce" ("lab on chip") employé sur le terrain, la génération d'un volume calibré de plasma sanguin peut s'avérer plus compliquée, notamment si l'on souhaite récupérer le volume calibré sous forme liquide et non sous une forme sèche.

Des dispositifs qui utilisent des membranes séparatives combinées à une solution de calibration du plasma ont déjà été décrits dans l'état de la technique.

Le brevet US5169789A décrit un dispositif qui associe une membrane séparative située au-dessus d'une cavité contenant le sang prélevé. Dans un premier temps la sédimentation des globules sanguins entraine une augmentation de la concentration des globules sanguins au fond de la cavité et une déplétion de ces globules sanguins sur le dessus, au voisinage de la membrane séparative. Le couvercle du dispositif porte la membrane séparative et possède une ouverture afin d'introduire une pipette. La pipette permet de générer une dépression suffisante pour aspirer le plasma à travers la membrane. Les caractéristiques de la pipette jouent donc un rôle dans la quantité de plasma collecté. Par ailleurs, ce dispositif ne propose pas de solution pour maîtriser les bulles d'air contenues dans la membrane séparative, ces bulles d'air venant modifier le volume de plasma récupéré dans la pipette.

La demande de brevet US 2014/0263059A1 décrit pour sa part un système micro-fluidique de séparation du plasma par filtration en utilisant le principe d'agglutination des globules rouges. La membrane employée pour la filtration présente un gradient de porosité donné et est recouverte d'agents agglutinants (telles que les lectines par exemple) qui conduisent à la formation d'agglutinats de globules rouges. Dans cette solution, la quantité de plasma qui est extraite varie selon la valeur de l'hématocrite (elle diminue quand l'hématocrite augmente).

Le document US2018/275058A1 décrit une solution permettant d'obtenir un volume calibré.

Les documents US2018/200677A1, EP2492682A1 décrivent des solutions de séparation de plasma sanguin.

Aujourd'hui, il n'existe pas de solution permettant de préparer un volume calibré de plasma à partir d'un prélèvement sanguin, qui soit :
- Simple d'utilisation, évitant l'usage d'une pipette et permettant notamment d'adapter facilement le volume calibré à obtenir en fonction de l'application,
- Fiable pour obtenir un volume calibré de plasma, garanti sans bulles d'air,
- Utilisable dans différentes conditions, notamment directement sur le terrain et sans employer de matériels spécifiques tels qu'une centrifugeuse.

### Exposé de l'invention

Ce but est atteint par un dispositif de préparation d'un volume calibré de plasma sanguin à partir d'un échantillon sanguin, qui comporte :
- Une carte comprenant un réseau fluidique,
- Plusieurs modules agencés sur la carte, comprenant un module de connexion fluidique, un module de séparation du plasma sanguin contenu dans ledit échantillon sanguin et un module d'obtention d'un volume calibré de plasma sanguin obtenu après séparation,
- Ledit module de connexion fluidique comprenant :
   ∘ Au moins un organe de connexion fluidique qui est adapté pour connecter un dispositif de prélèvement d'un échantillon sanguin et qui comporte une première entrée fluidique dudit réseau fluidique par laquelle est introduit l'échantillon sanguin prélevé,
   ∘ Une première sortie fluidique dudit réseau fluidique connectée à ladite première entrée fluidique,
   ∘ Des moyens de libération de l'échantillon sanguin à travers ladite première entrée fluidique,
- Ledit module de séparation du plasma sanguin contenu dans ledit échantillon sanguin, comprenant :
   ∘ Une chambre réalisée dans la carte,
   ∘ Une membrane séparative séparant ladite chambre en un premier espace et un deuxième espace,
   ∘ Au moins une deuxième entrée fluidique dudit réseau fluidique reliée à ladite première sortie fluidique du module de connexion et débouchant dans le premier espace de la chambre,
   ∘ Une deuxième sortie fluidique dudit réseau fluidique débouchant dans ledit deuxième espace de la chambre,
- Ledit module d'obtention d'un volume calibré de plasma sanguin obtenu après séparation, comprenant :
   ∘ Au moins un ensemble de pompage fluidique comportant au moins une pompe,
   ∘ Une première liaison fluidique reliant ladite deuxième sortie fluidique via une première vanne fluidique dudit réseau fluidique à l'ensemble de pompage,
   ∘ Un premier réservoir de collecte muni d'un premier évent et connecté à l'ensemble de pompage via une deuxième liaison fluidique commandée par une deuxième vanne fluidique du réseau,
   ∘ Un deuxième réservoir de collecte muni d'un deuxième évent et connecté à l'ensemble de pompage via une troisième liaison fluidique commandée par une troisième vanne fluidique du réseau
   ∘ Ladite au moins une pompe comprenant une cavité qui présente un volume qui correspond à un volume unitaire du volume calibré à obtenir dans le deuxième réservoir de collecte.

Selon une particularité, ledit organe de connexion comporte une première aiguille présentant un premier canal interne entre ladite première entrée fluidique et ladite première sortie fluidique et une extrémité libre contondante.

Selon une autre particularité, les moyens de libération de l'échantillon sanguin opèrent par gravité et en ce qu'ils comportent une deuxième aiguille présentant une extrémité libre contondante et un deuxième canal interne relié à une première ouverture réalisée sur la carte, une deuxième ouverture réalisée sur la carte étant reliée audit premier canal interne de ladite première aiguille.

Selon une autre particularité, ladite première ouverture et ladite deuxième ouverture sont chacune recouvertes d'un filtre hydrophobe.

Selon une réalisation particulière, l'ensemble de pompage comporte une seule pompe et le premier réservoir de collecte et le deuxième réservoir de collecte sont reliés en parallèle à ladite pompe respectivement via la deuxième liaison fluidique et via la troisième liaison fluidique.

Selon une particularité, la pompe comporte une membrane déformable séparant de manière étanche sa cavité en un premier volume destiné à être connecté à un point de commande pneumatique et un deuxième volume dans lequel débouche une ou plusieurs desdites liaisons fluidiques.

Selon une autre réalisation particulière, l'ensemble de pompage comporte deux pompes, une première pompe reliée par la première liaison fluidique à la deuxième sortie fluidique et au premier réservoir de collecte par la deuxième liaison fluidique et une deuxième pompe reliée par une quatrième liaison fluidique, via une quatrième vanne fluidique, au premier réservoir de collecte et au deuxième réservoir de collecte par la troisième liaison fluidique.

Selon cette autre réalisation particulière, le module d'obtention d'un volume calibré de plasma sanguin comporte une cinquième liaison fluidique reliant directement ladite première pompe audit deuxième réservoir de collecte et commandée par une cinquième vanne fluidique.

Selon une autre particularité, chaque pompe comporte une cavité réalisée dans la carte et une membrane déformable séparant de manière étanche ladite cavité en un premier volume destiné à être connecté à un point de commande pneumatique et un deuxième volume dans lequel débouche une ou plusieurs desdites liaisons fluidiques.

Selon une autre particularité, la cavité de ladite seule pompe présente un volume qui correspond à un volume unitaire du volume calibré à obtenir dans le deuxième réservoir de collecte.

Selon une autre particularité, la chambre du module de séparation du plasma sanguin comporte un volume mort agencé entre ladite membrane séparative et au moins une paroi du deuxième espace de la chambre.

Selon une autre particularité, la carte comporte une cavité agencée sous ladite membrane séparative et agencée entre la première sortie fluidique et la deuxième entrée fluidique.

Selon une autre particularité, le deuxième réservoir de collecte comporte plusieurs chambres fluidiques agencées en parallèle.

L'invention concerne également un système de préparation d'un volume calibré de plasma sanguin, ledit système comportant :
- un dispositif de préparation d'un volume calibré de plasma sanguin tel que défini ci-dessus,
- un système d'actionnement pneumatique comprenant au moins un point de commande pneumatique connecté à l'ensemble de pompage et plusieurs points de commande pneumatiques connectés chacun à une vanne fluidique distincte du réseau fluidique,
- une unité de traitement et de commande dudit système d'actionnement pneumatique, configurée pour exécuter une séquence de commande adaptée pour obtenir un volume calibré de plasma sanguin.

Selon une particularité, le système comporte une pompe connectée sur ledit dispositif et reliée à ladite première entrée fluidique pour aspirer l'échantillon sanguin dans ledit dispositif.

L'invention concerne également un procédé de commande mis en oeuvre dans une unité de commande pour obtenir un échantillon de volume calibré de plasma sanguin à partir d'un échantillon sanguin présent dans un dispositif de prélèvement connecté sur le dispositif de préparation du système tel que celui défini ci-dessus, ledit procédé comportant une séquence de commande ayant les étapes suivantes :
a) Commande d'ouverture de la première vanne fluidique, de fermeture de la deuxième vanne fluidique et de fermeture de la troisième vanne fluidique,
b) Commande de l'ensemble de pompage pour aspiration dudit échantillon sanguin à travers ladite membrane séparative,
c) Commande de fermeture de la première vanne fluidique et d'ouverture de la deuxième vanne fluidique,
d) Commande de l'ensemble de pompage pour remplissage au moins partiel dudit premier réservoir de collecte,
e) Mise en oeuvre des étapes a) à d) jusqu'à remplissage au moins partiel du premier réservoir de collecte,
f) Commande d'ouverture de la deuxième vanne fluidique et de fermeture de la troisième vanne fluidique,
g) Commande de l'ensemble de pompage pour aspiration dudit plasma sanguin contenu dans le premier réservoir de collecte,
h) Commande de fermeture de la deuxième vanne fluidique et d'ouverture de la troisième vanne fluidique,
i) Commande de l'ensemble de pompage pour remplissage du deuxième réservoir de collecte,
j) Mise en oeuvre des étapes f) à i) jusqu'à obtenir le volume calibré souhaité dans le deuxième réservoir de collecte.

### Brève description des figures

D'autres caractéristiques et avantages vont apparaître dans la description détaillée qui suit, faite en regard des dessins annexés dans lesquels :
- La figure 1 représente de manière schématique le système de préparation conforme à l'invention ;
- Les figures 2A à 2C représentent, vue en coupe, la carte du dispositif de préparation de l'invention selon différentes variantes de réalisation ;
- La figure 3 illustre le principe de fonctionnement d'une pompe employée dans le dispositif de l'invention ;
- La figure 4 représente en vue de dessus une réalisation particulière de la carte micro-fluidique employée dans le dispositif de préparation conforme à l'invention ;
- La figure 5 représente les différentes étapes du procédé de préparation d'un volume calibré de plasma sanguin ;
- La figure 6 montre une variante de réalisation du réseau fluidique employé dans le dispositif de l'invention.

### Description détaillée d'au moins un mode de réalisation

Dans la suite de la description, les termes :
- "haut", "bas", "au-dessous", "au-dessus", "supérieur", "inférieur" ou termes équivalents sont à considérer de manière non limitative en suivant un axe vertical (X) visible sur les dessins ;
- "amont" et "aval" sont à considérer en tenant compte du sens de déplacement du fluide dans le système ;

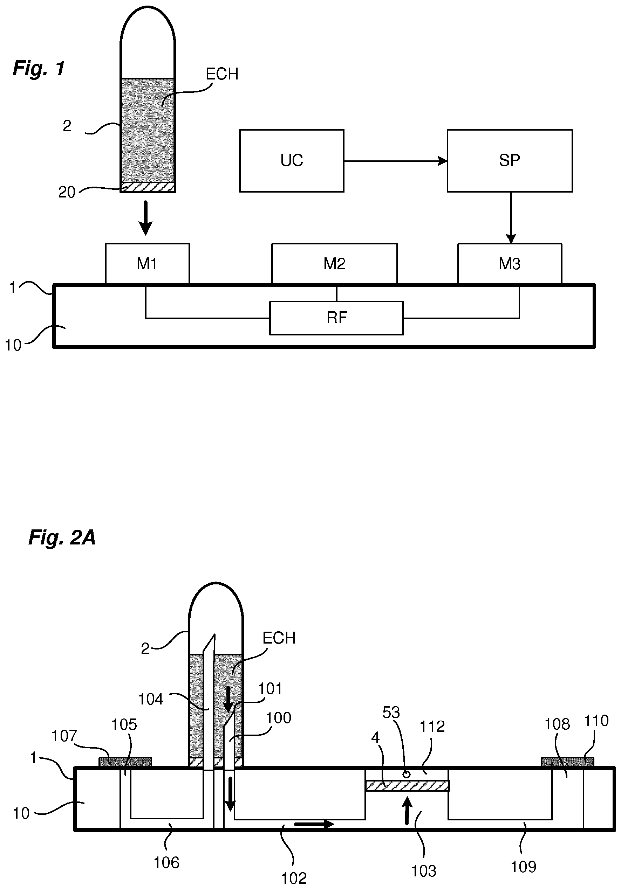

En référence à la figure 1, le système de préparation d'un volume calibré de plasma sanguin comporte plusieurs parties :
- Un dispositif 1 de préparation du volume calibré de plasma sanguin, se présentant sous la forme d'une unique carte 10 ;
- Un système d'actionnement de type pneumatique SP permettant d'actionner des éléments à commande pneumatique présents sur la carte ;
- Une unité de traitement et de commande UC configurée pour exécuter une séquence de commande de différents points de commande pneumatique du système d'actionnement pneumatique, en vue d'obtenir, à partir d'un échantillon sanguin prélevé, le volume calibré de plasma sanguin ; cette unité de traitement et de commande peut comporter un microcontrôleur et des entrées/sorties connectées au système d'actionnement pneumatique ;

De manière générale, la carte 10 du dispositif comporte notamment un réseau fluidique RF, ou même micro-fluidique, pouvant comporter des réservoirs, des canaux fluidiques, des vannes et une ou plusieurs pompes. La carte peut également comporter plusieurs points de commande pneumatique destinés chacun à la commande pneumatique d'un élément du réseau fluidique de la carte. Un point de commande pneumatique comporte une entrée et un canal pneumatique par lesquels peut être appliquée une pression ou une dépression d'air.

Le dispositif 1 comporte avantageusement trois modules distincts :
- Un module M1 de connexion fluidique sur lequel peut être connecté un dispositif de prélèvement sanguin ;
- Un module M2 de séparation du plasma sanguin contenu dans l'échantillon sanguin ;
- Un module M3 d'obtention d'au moins un volume calibré de plasma sanguin, après séparation ;

Selon un aspect particulier de l'invention, ces trois modules sont avantageusement réalisés sur la même carte 10 et sont interconnectés via le réseau fluidique RF de la carte.

On considérera que la carte 10 présente une face supérieure, une face inférieure et une épaisseur formant sa tranche. La carte peut être réalisée par assemblage de plusieurs substrats et le réseau fluidique est avantageusement créé par gravure ou moulage sur un ou plusieurs des substrats de la carte. Ce type de carte 10 étant bien connu, sa réalisation n'est pas décrite dans la présente demande.

En référence à la figure 1, le module M1 de connexion fluidique permet une connexion directe d'un dispositif de prélèvement sanguin, tel que par exemple le tube 2 utilisé lors de la prise de sang sur le patient, destiné à contenir un échantillon sanguin ECH de sang total. Ce tube 2 peut être bouché par un septum 20.

Ce module M1 peut comporter au moins une première aiguille 100 en proéminence sur la face supérieure de la carte 10. La première aiguille 100 comporte un canal interne agencé entre une entrée fluidique et une sortie fluidique, et une extrémité libre 101 contondante pour perforer le septum 20 du tube 2 de prélèvement. Sa sortie fluidique est reliée à une cavité 103 via un canal fluidique 102 du réseau RF de la carte. Le module M1 comporte ainsi un circuit fluidique de prélèvement comportant le canal de l'aiguille, le canal 102 et la cavité 103 réalisée dans la carte.

La connexion du tube 2 sur ce module M1 est réalisée en perçant le septum 20 par l'extrémité 101 de l'aiguille 100. Une liaison étanche permet d'éviter les fuites de liquide autour de la connexion.

Pour libérer l'échantillon sanguin ECH présent dans le tube 2, différentes solutions peuvent être envisagées. Trois exemples sont donnés ci-dessous.

Par gravité - Figure 2A : Dans ce cas, le module M1 comporte en plus une deuxième aiguille 104 du même type que la première aiguille, c'est-à-dire avec un canal interne et une extrémité libre contondante pour perforer le septum apposé sur le tube. Son canal est relié à un premier évent 105 réalisé sur la carte via un canal fluidique 106 du réseau RF de la carte. Ce premier évent peut être recouvert d'un filtre hydrophobe 107. Pour permettre la libération du fluide présent dans le tube, la cavité 103 est reliée à un deuxième évent 108 via un canal 109 du réseau RF. Ce deuxième évent 108 peut également être recouvert d'un filtre hydrophobe 110. On peut noter que chaque filtre hydrophobe présent dans le dispositif permet de laisser passer les gaz (par exemple : air, azote, vapeur d'eau...) mais pas les liquides. Lors de la connexion du tube sur le module, le septum 20 est perforé par les aiguilles pour permettre au sang de s'écouler par gravité dans la cavité du circuit fluidique de prélèvement. La longueur de la deuxième aiguille 104 sera choisie supérieure à celle de la première aiguille 100 et est adaptée pour rester en contact avec l'air présent dans le tube, au-dessus du niveau du sang prélevé dans le tube.

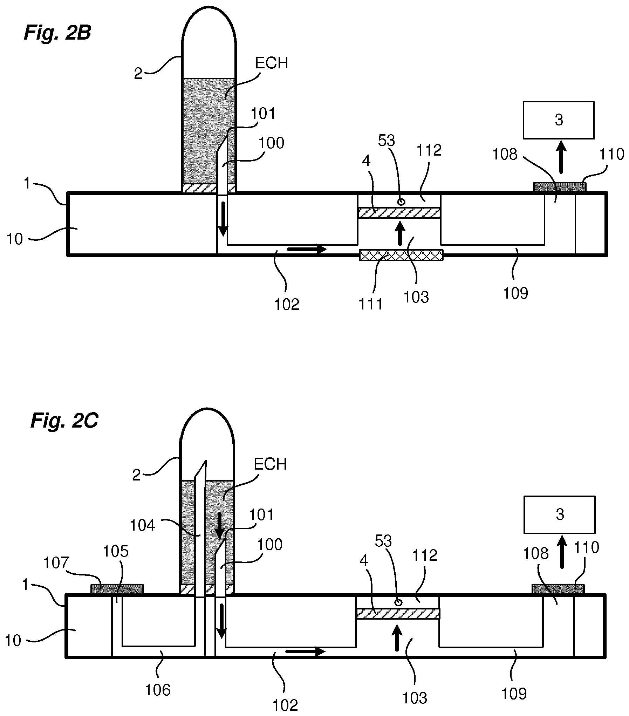

Par aspiration - Figure 2B : Dans cette configuration, le module M1 peut présenter une architecture à une seule aiguille 100 venant perforer le septum 20. Une pompe 3 est connectée au deuxième évent 108 référencée ci-dessus, à travers le filtre hydrophobe 110. Le filtre hydrophobe 110 bloque le sang et assure un remplissage complet de la cavité 103 sans contrainte de durée d'application de la dépression. De manière avantageuse, le vide d'air appliqué par la pompe 3 peut être absorbé de différentes manières, par exemple en utilisant un tube déformable ou en intégrant au circuit fluidique de prélèvement du module une membrane déformable 111. Cette membrane 111 est tendue sur une face de la carte 10 pour recouvrir au moins partiellement la cavité 103 réalisée dans la carte. Lors de l'aspiration générée par la pompe 3, la membrane 111 sera donc amenée à se déformer pour compenser le phénomène d'aspiration. Cependant, comme le volume à aspirer est faible, il serait également possible de se passer de ces solutions de compensation du vide d'air généré par la pompe 3 lors de l'aspiration.

Par gravité et aspiration - Figure 2C : Cette architecture correspond à celle de la figure 2A, à laquelle est ajoutée la pompe 3 de l'architecture de la figure 2B, permettant ainsi de compléter la libération par gravité. L'actionnement de la pompe 3 permet d'aspirer l'échantillon dans le réseau fluidique RF, comme décrit précédemment.

Le module M2 de séparation du plasma sanguin comporte préférentiellement une membrane 4 séparative faisant office de filtre (représentée sur les figures 2A à 2C). Celle-ci est logée dans la carte 10 pour séparer une chambre en deux espaces distincts. Un premier espace, côté amont, peut correspondre à la cavité 103 du circuit fluidique de prélèvement qui contient le sang prélevé par le premier module M1 et un deuxième espace 112, côté aval, qui est destiné à recevoir un volume de plasma obtenu après filtration par la membrane 4. Selon une configuration particulière, la cavité est située sous la membrane 4 et le deuxième espace est situé au-dessus de la membrane 4.

De manière connue, la membrane 4 séparative est spécifiquement étudiée pour la génération de plasma à partir du sang total. La nature de la membrane permet aux composants cellulaires de sang (globules rouges, globules blancs et plaquettes) d'être capturés dans des larges pores de la membrane sans lyse, alors que le plasma s'écoule dans des pores plus petits du côté aval de la membrane. Ce type de membrane est bien connu et n'est pas décrit en détails dans la présente demande. Il pourra s'agir d'une membrane telle que décrite dans la demande de brevet US2014/0263059A1.

Il faut noter que pour passer à travers la membrane 4, il est nécessaire de venir aspirer l'échantillon sanguin présent dans la cavité 103. Cette aspiration est réalisée en employant une pompe du module M3 d'obtention du volume calibré de plasma dont l'architecture et le principe de fonctionnement sont décrits ci-dessous.

Le module M3 d'obtention du volume calibré de plasma utilise en effet une pompe de type fluidique, à actionnement pneumatique.

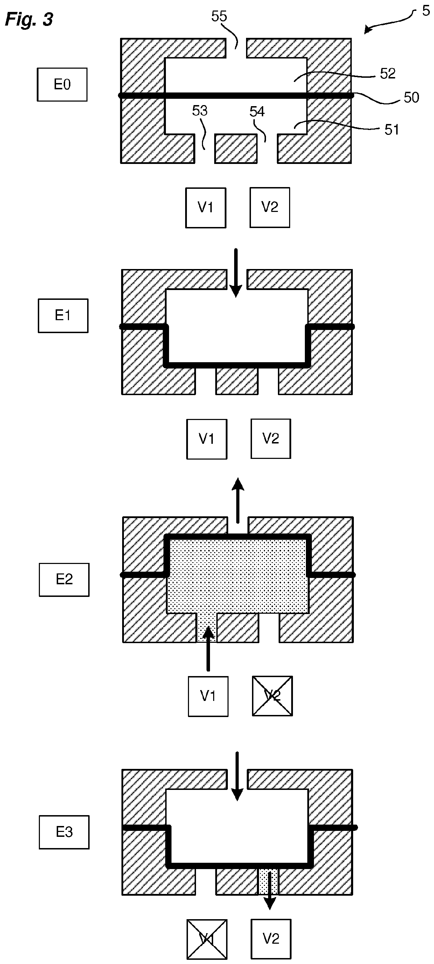

Ce type de pompe 5 représenté sur la figure 3 (E0 - dans l'état non actionné) comporte une membrane 50 déformable agencée dans une cavité de la carte et séparant la cavité en deux volumes 51, 52 étanches l'un par rapport à l'autre. Le premier volume 51 est destiné à pomper le plasma obtenu après séparation et le deuxième volume 52 permet l'actionnement pneumatique de la membrane.

Au moins deux liaisons fluidiques 53, 54 du réseau débouchent dans le premier volume 51 et une liaison pneumatique 55 débouche dans le deuxième volume 52.

La première liaison fluidique 53 est commandée par une première vanne fluidique V1 commandable à l'ouverture ou à la fermeture par le système d'actionnement pneumatique SP.

La deuxième liaison fluidique 54 est commandée par une deuxième vanne fluidique V2 commandable à l'ouverture ou à la fermeture par le système d'actionnement pneumatique SP.

Bien entendu, dans la solution de l'invention, les deux vannes fluidiques pourront être de type normalement fermé ou normalement ouvert, de type monostable ou bistable. On verra également que la pompe peut être connectée à plus de deux liaisons fluidiques commandées, selon la configuration envisagée.

En référence à la figure 3, le principe de fonctionnement d'une telle pompe 5 est le suivant :
- E1 : Une pression est appliquée dans le deuxième volume de la pompe pour plaquer la membrane 50 au fond de la cavité et initier le principe d'aspiration ; La vanne V2 est alors ouverte et la vanne V1 peut être ouverte ou fermée ;
- La première vanne fluidique V1 est commandée à l'ouverture et la deuxième vanne fluidique V2 est commandée à la fermeture ;
- E2 : Une dépression est appliquée dans le deuxième volume 52 pour faire remonter la membrane 50, créant une aspiration du fluide par la première liaison fluidique 53 dans le premier volume 51 de la cavité. La dépression est avantageusement appliquée jusqu'à plaquer la membrane 50 en haut de la cavité et remplissage complet du premier volume 51 (qui correspond alors au volume complet de la cavité de la pompe) ;
- La première vanne fluidique V1 est commandée à la fermeture et la deuxième vanne fluidique V2 est commandée à l'ouverture.
- E3 : Une pression est appliquée à la membrane 50 pour pousser le fluide présent dans le premier volume 51 par la deuxième liaison fluidique 54 jusqu'à plaquer la membrane 50 au fond de la cavité et évacuer la totalité du fluide en dehors de la pompe 5 ;

Ce principe de fonctionnement de la pompe 5 est appliqué au dispositif de l'invention, notamment à son module M3 d'obtention de volume calibré de plasma.

Le module M3 d'obtention de volume calibré de plasma comporte en effet un ensemble de pompage EP pouvant inclure au moins une pompe telle que celle décrite ci-dessus en liaison avec la figure 3. Ci-dessous, nous présentons deux réalisations, une première réalisation à une seule pompe 5 et une deuxième réalisation à deux pompes 5A, 5B.

Dans les deux réalisations, la première liaison fluidique 53 évoquée ci-dessus communique avec le deuxième espace 112 de ladite chambre à travers la première vanne fluidique V1 commandable à l'ouverture ou à la fermeture par le système d'actionnement pneumatique SP, afin de permettre l'aspiration du plasma dans le module M3. La deuxième liaison fluidique 54 communique pour sa part avec un premier réservoir de collecte R1 du module M3 de calibration à travers la deuxième vanne fluidique V2 commandable à l'ouverture ou à la fermeture par le système d'actionnement pneumatique SP.

Par ailleurs, le module M3 comporte également un deuxième réservoir de collecte R2.

L'architecture fluidique du module M3 est réalisée sur la carte 10.

Chacune des deux réalisations comporte au moins une pompe dont le volume (correspondant au volume maximal de sang qu'elle peut aspirer dans sa cavité) correspond à l'unité de base du volume calibré à obtenir. En effet, comme il est possible de faire un ou plusieurs cycles de pompage, on peut obtenir dans le deuxième réservoir de collecte R2 défini ci-dessus un volume égal à celui de cette pompe, multiplié par le nombre de cycles de pompage effectué.

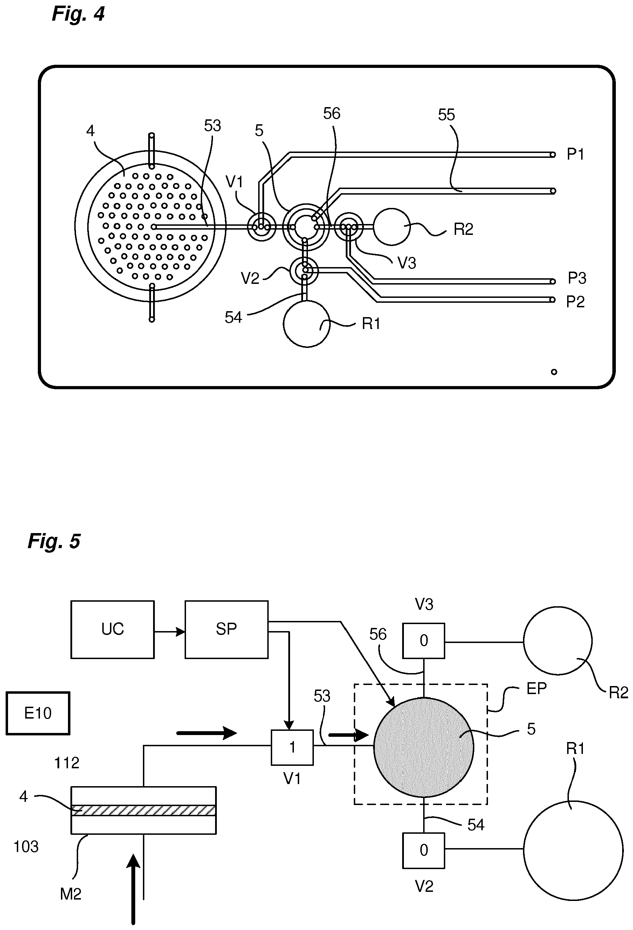

L'architecture fluidique d'une réalisation à une seule pompe est représentée sur la figure 4.

Sur cette figure 4, on a ainsi représenté :
- La membrane séparative 4 ;
- La pompe 5 ;
- La liaison fluidique 53 reliant uniquement le premier volume 51 de la pompe 5 au deuxième espace 112 de la chambre ;
- La première vanne fluidique V1 commandable à l'ouverture ou à la fermeture via un point de commande pneumatique P1 ;
- Le premier réservoir de collecte R1 ;
- La deuxième liaison fluidique 54 reliant uniquement le premier volume 51 de la pompe 5 au premier réservoir de collecte R1 ;
- La deuxième vanne fluidique V2 commandable à l'ouverture ou à la fermeture via un point de commande pneumatique P2 ;
- Le deuxième réservoir de collecte R2 ;
- Une troisième liaison fluidique 56 reliant uniquement le premier volume 51 de la pompe au deuxième réservoir de collecte R2 ;
- Une troisième vanne fluidique V3 commandable à l'ouverture ou à la fermeture via un point de commande pneumatique P3, cette vanne V3 étant agencée sur la troisième liaison fluidique 56 ;

Chaque réservoir de collecte R1, R2 peut prendre une forme quelconque et un volume quelconque. Bien entendu, ils seront tous les deux avantageusement d'un volume supérieur ou égal au volume de la cavité de la pompe 5. Il pourra notamment s'agir d'un simple canal fluidique, dont la section (constante ou non) et la longueur définissent le volume du réservoir.

Dans la première réalisation, la pompe 5 est ainsi reliée aux deux réservoirs en parallèle, via deux liaisons fluidiques distinctes commandables chacune à l'ouverture ou à la fermeture.

Dans la réalisation à une seule pompe 5, le volume de la pompe, correspondant au volume maximal de sang qu'elle peut aspirer dans sa cavité, correspond à l'unité de base du volume calibré à obtenir. En effet, comme il est possible de faire un ou plusieurs cycles de pompage, on peut obtenir dans le deuxième réservoir de collecte R2 défini ci-dessus un volume égal à celui de la pompe, multiplié par le nombre de cycles de pompage effectué.

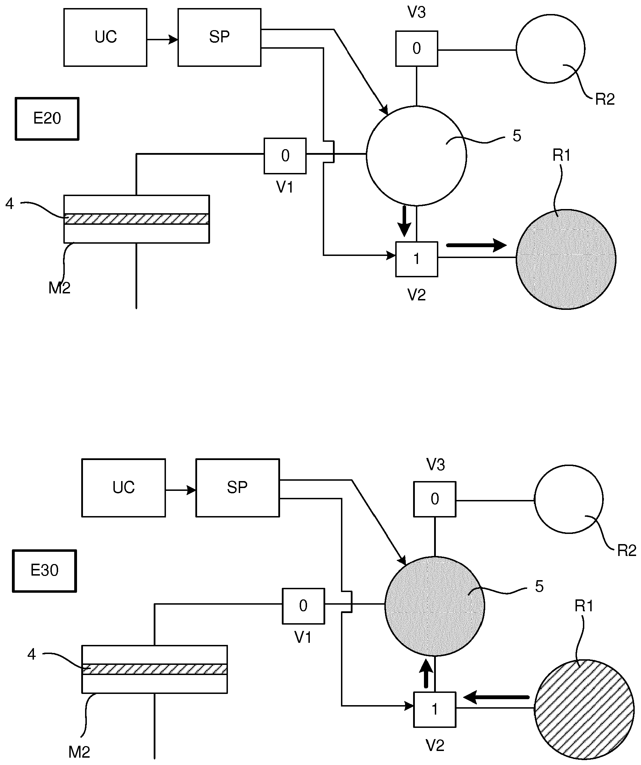

Partant de cette première architecture, en référence à la figure 5, l'obtention d'un volume calibré de plasma sanguin se déroule comme explicité ci-dessous. Sur la figure 5, l'état 0 d'une vanne correspond à son état fermé, c'est-à-dire qu'elle n'autorise pas l'écoulement du fluide dans la liaison fluidique qu'elle commande, et l'état 1 d'une vanne correspond à son état ouvert, c'est-à-dire qu'elle autorise l'écoulement du fluide dans la liaison fluidique qu'elle commande.
- Initialement, la première vanne fluidique V1 est ouverte et la deuxième vanne fluidique V2 et la troisième vanne fluidique V3 sont fermées ;
- E10 : La pompe 5 est actionnée comme expliqué ci-dessus pour aspirer du plasma dans son premier volume 51. L'aspiration générée permet d'entraîner le sang prélevé et présent dans la cavité 103 à travers la membrane séparative 4 pour séparer le plasma sanguin. Le plasma séparé présent dans ledit deuxième espace 112, est ensuite transféré dans le premier volume 51 de la pompe via la première liaison fluidique 53. Le premier volume 51 de la pompe est rempli en totalité par le plasma sanguin et par des éventuelles bulles d'air.
- La première vanne fluidique V1 est fermée. La deuxième vanne fluidique V2 est ouverte et la troisième vanne fluidique V3 est maintenue fermée.
- E20 : La pompe 5 est actionnée pour déplacer le plasma présent dans son deuxième volume 51 par la deuxième liaison fluidique 54 en direction du premier réservoir de collecte R1.
- Le cycle de pompage correspondant aux étapes E10 à E20 précédentes peut être mis en œuvre une ou plusieurs fois. Une fois que le premier réservoir de collecte R1 est rempli de plasma selon la quantité souhaitée, la première vanne fluidique V1 est fermée, la deuxième vanne fluidique V2 est ouverte et la troisième vanne fluidique V3 est fermée.
- E30 : L'actionnement de la pompe 5 permet d'aspirer un premier volume calibré unitaire de plasma en provenance du premier réservoir de collecte R1 dans le premier volume 51 de la pompe via la deuxième liaison fluidique 54.
- La première vanne fluidique V1 reste fermée, la deuxième vanne fluidique V2 est fermée et la troisième vanne fluidique V3 est ouverte.
- E40 : La pompe 5 est actionnée pour déplacer le volume calibré unitaire de plasma prélevé dans son premier volume 51 vers le deuxième réservoir de collecte R2 à travers la troisième liaison fluidique 56.
   Le cycle de pompage des étapes E30 à E40 peut être mis en oeuvre jusqu'à obtention du volume total calibré demandé. Le nombre de cycles de pompage est appliqué en fonction du volume total calibré à obtenir. Le volume de plasma présent dans le premier réservoir de collecte R1 pourra être au moins égal au volume de plasma calibré à obtenir dans le deuxième réservoir de collecte R2.

Selon une particularité de cette réalisation, le volume de la cavité de la pompe 5 peut être choisi faible afin de permettre une gamme de volumes avec une bonne résolution. Par exemple on peut avoir une pompe de 5µL que l'on va actionner une ou plusieurs fois pour obtenir des volumes de plasma calibrés allant de 5µL, 10µL, 15µL, 20µL...

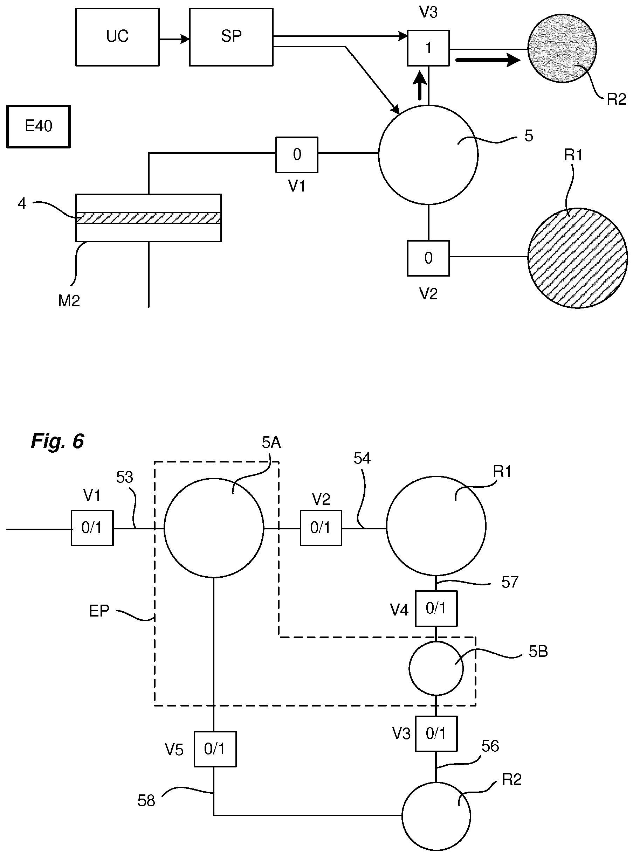

Dans la deuxième réalisation représentée sur la figure 6, l'ensemble de pompage EP du module d'obtention du volume calibré peut comporter deux pompes 5A, 5B.

La première pompe 5A est employée pour récupérer le plasma en provenance du module M2 de séparation et le diriger vers le premier réservoir de collecte R1 ou directement vers le deuxième réservoir de collecte R2. Cette première pompe 5A peut avoir une capacité importante (par exemple 50µL, 100µL etc...) afin de permettre de limiter le nombre d'actionnements. La deuxième pompe 5B présente un volume plus faible (par exemple 5µL, 10µL, 25µL, etc...) et est employée pour prélever le plasma en provenance du premier réservoir de collecte R1 pour le transférer vers le deuxième réservoir de collecte R2 correspondant au volume calibré. Dans cette réalisation, comme illustré par la figure 6, la première pompe 5A, le premier réservoir de collecte R1, la deuxième pompe 5B et le deuxième réservoir de collecte R2 sont alors connectés en série de la manière suivante :
- Première liaison fluidique 53,
- Première vanne fluidique V1 contrôlant la première liaison fluidique,
- Première pompe 5A,
- Premier réservoir de collecte R1,
- Deuxième liaison fluidique 54,
- Deuxième vanne fluidique V2 contrôlant la deuxième liaison fluidique,
- Nouvelle liaison fluidique, dite quatrième liaison fluidique 57,
- Nouvelle vanne fluidique V4 contrôlant la quatrième liaison fluidique 57,
- Deuxième pompe 5B,
- Troisième liaison fluidique 56,
- Troisième vanne fluidique V3 contrôlant la troisième liaison fluidique 56,

Par ailleurs, en plus de cette configuration en série, une cinquième liaison fluidique 58 relie donc directement la première pompe 5A au deuxième réservoir de collecte R2, via une cinquième vanne fluidique V5.

Le fonctionnement de la deuxième réalisation est le suivant. La première pompe 5A permet d'aspirer le plasma séparé dans le module M2 vers le premier réservoir de collecte R1 via la liaison fluidique 54 ou directement vers le deuxième réservoir de collecte R2 via la liaison fluidique 58. Un ou plusieurs cycles de pompage de la première pompe 5A peuvent être réalisés selon la quantité de plasma à transférer. Comme la première pompe 5A peut être choisie avec un volume supérieur à celui de la deuxième pompe 5B, celle-ci peut ainsi servir à transférer directement un plus gros volume de plasma vers le deuxième réservoir de collecte R2 via la liaison fluidique 58. Puis, pour affiner le volume calibré à obtenir, une quantité de plasma est transférée du premier réservoir de collecte R1 vers le deuxième réservoir de collecte R2 en employant la deuxième pompe 5B. Le volume calibré à obtenir pourra ainsi être déterminé à partir du nombre de cycles de pompage appliqué à la première pompe 5A directement vers le deuxième réservoir de collecte R2 puis par le nombre de cycles de pompage appliqué à la deuxième pompe 5B du premier réservoir de collecte R1 vers le deuxième réservoir de collecte R2. On peut noter qu'il est également possible d'utiliser la première pompe 5A pour transférer un volume de plasma dans le premier réservoir de collecte R1 puis de transférer du plasma jusqu'à obtenir le volume calibré en employant la deuxième pompe 5B.

Dans la première architecture et la deuxième architecture, la récupération du plasma sanguin est toujours réalisée en deux étapes et de manière asynchrone. Cette solution permet notamment de supprimer les bulles d'air. Le stockage intermédiaire d'un volume de plasma dans le premier réservoir de collecte R1 permet en effet d'éliminer les bulles d'air dans ce réservoir, avant transfert vers le deuxième réservoir de collecte R2. En effet, lors du premier pompage vers le premier réservoir de collecte R1, les bulles d'air sont évacuées et le deuxième pompage vers le deuxième réservoir de collecte R2 à volume calibré permet de récupérer du plasma sans bulle d'air.

Selon une réalisation particulière, le deuxième réservoir de collecte R2 peut être remplacé par un ensemble de plusieurs chambres reliées en parallèle à un même canal de répartition. Chaque chambre pourra loger un réactif différent permettant in fine le dosage d'un analyte particulier dans chaque chambre.

Selon une particularité, les deux réservoirs de collecte R1, R2 peuvent être ouverts à l'air ambiant, être dotés d'un évent ou être recouverts d'une membrane déformable.

On comprend de chaque réalisation décrite ci-dessus que la filtration à travers la membrane séparative 4 est réalisée du bas vers le haut (lorsque le dispositif est disposé sur un support plan), c'est-à-dire de la cavité 103 vers la pompe 5. En plaçant la cavité 103 sous la membrane 4, la partie la moins riche en éléments figurés de l'échantillon du sang est filtrée en premier lors de l'aspiration, permettant d'éviter de surcharger la membrane dès le début du processus de séparation du plasma.

Selon une autre particularité, le module M2 de séparation peut présenter un volume mort au-dessus de la membrane afin de mieux répartir la pression sur toute la membrane lors de l'aspiration par la pompe.

De manière avantageuse, il serait possible de prévoir une analyse du plasma directement dans le deuxième réservoir de collecte R2 à volume calibré ou, si elles sont présentes, dans chaque chambre si ce deuxième réservoir R2 est remplacé par un réseau de plusieurs chambres en parallèle.

Le procédé permettant d'obtenir un volume final calibré dans le deuxième réservoir de collecte R2 est réalisé en suivant une séquence de commande adaptée, notamment en envoyant des ordres de commande successifs au système d'actionnement pneumatique.

La séquence de commande est exécutée par l'unité de traitement et de commande UC du système.

Après activation du système de préparation et en considérant de manière non limitative que les vannes fluidiques sont de type normalement fermé, pour obtenir un volume calibré, la séquence exécutée par l'unité de traitement et de commande UC sur une architecture dotée d'un ensemble de pompage EP à une seule pompe 5, peut comporter les étapes suivantes :
- Génération d'une commande et émission de la commande à une pompe 3 (si la libération est réalisée par aspiration) externe pour aspirer l'échantillon sanguin en dehors du tube 2 après avoir connecté celui-ci sur le module M1 de connexion ; Cette commande est optionnelle si la libération est réalisée uniquement par gravité ;
- Génération d'une commande à destination du système d'actionnement pneumatique SP pour commander la première vanne fluidique V1 à l'ouverture ;
- Génération d'une commande et émission de la commande vers le système d'actionnement pneumatique SP pour commander la pompe 5 afin d'aspirer l'échantillon sanguin ECH à travers la membrane séparative pour récupérer le plasma sanguin dans le premier volume 51 de la pompe 5 ;
- Génération d'une commande à destination du système d'actionnement pneumatique SP pour commander la deuxième vanne fluidique V2 à l'ouverture ;
- Génération d'une commande et émission de la commande vers le système d'actionnement pneumatique SP pour commander la pompe 5 afin d'injecter le plasma sanguin présent dans le volume de la pompe 5 vers le premier réservoir de collecte R1 ;
- L'unité de commande UC peut déterminer le nombre de cycles de pompage nécessaires pour remplir suffisamment le premier réservoir de collecte ;
- Une fois le premier réservoir de collecte R1 rempli au moins partiellement de plasma sanguin (éventuellement obtenu après plusieurs cycles de pompage), génération d'une commande à destination du système d'actionnement pneumatique SP pour commander la deuxième vanne fluidique V2 à l'ouverture ;
- Génération d'une commande et émission de la commande vers le système d'actionnement pneumatique SP pour commander la pompe 5 afin d'aspirer le plasma sanguin présent dans le premier réservoir de collecte R1 vers le volume de la pompe 5 ;
- Génération d'une commande à destination du système d'actionnement pneumatique pour commander la troisième vanne fluidique V3 à l'ouverture ;
- Génération d'une commande et émission de la commande vers le système d'actionnement pneumatique SP pour commander la pompe 5 afin d'injecter le plasma sanguin présent dans le volume de la pompe vers le deuxième réservoir de collecte R2 ;
- L'unité de commande UC peut déterminer le nombre de cycles de pompage nécessaires pour obtenir le volume calibré souhaité dans le deuxième réservoir de collecte R2 ;

Le principe de commande sera identique pour un ensemble de pompage EP à deux pompes tel que décrit ci-dessus.

La solution de l'invention présente de nombreux avantages parmi lesquels :
- Une calibration du volume de plasma précise, notamment grâce à l'élimination des bulles d'air par le passage via le premier réservoir de collecte ;
- Possibilité de choisir le volume calibré en adaptant le nombre de cycles de pompage vers le deuxième réservoir de collecte ;
- Possibilité de réaliser plusieurs analyses en parallèle sur la même carte avec des volumes de plasma différents dans le cas d'une solution à plusieurs chambres en parallèle ;
- Réalimentation automatique du sang dans la cavité par gravité ;
- Contrôle précis de la pression pour éviter l'hémolyse.

## Revendications

1. Dispositif (1) de préparation d'un volume calibré de plasma sanguin à partir d'un échantillon sanguin (ECH), **caractérisé en ce qu'**il comporte :
- Une carte (10) comprenant un réseau fluidique (RF),
- Plusieurs modules agencés sur la carte, comprenant un module (M1) de connexion fluidique, un module (M2) de séparation du plasma sanguin contenu dans ledit échantillon sanguin (ECH) et un module (M3) d'obtention d'un volume calibré de plasma sanguin obtenu après séparation,
- Ledit module (M1) de connexion fluidique comprenant :
∘ Au moins un organe de connexion fluidique qui est adapté pour connecter un dispositif de prélèvement d'un échantillon sanguin et qui comporte une première entrée fluidique dudit réseau fluidique par laquelle est introduit l'échantillon sanguin prélevé,
∘ Une première sortie fluidique dudit réseau fluidique connectée à ladite première entrée fluidique,
∘ Des moyens de libération de l'échantillon sanguin à travers ladite première entrée fluidique,
- Ledit module (M2) de séparation du plasma sanguin contenu dans ledit échantillon sanguin (ECH), comprenant :
∘ Une chambre réalisée dans la carte,
∘ Une membrane séparative (4) séparant ladite chambre en un premier espace (103) et un deuxième espace (112),
∘ Au moins une deuxième entrée fluidique dudit réseau fluidique reliée à ladite première sortie fluidique du module (M1) de connexion et débouchant dans le premier espace de la chambre,
∘ Une deuxième sortie fluidique dudit réseau fluidique débouchant dans ledit deuxième espace de la chambre,
- Ledit module (M3) d'obtention d'un volume calibré de plasma sanguin obtenu après séparation, comprenant :
∘ Au moins un ensemble de pompage (EP) fluidique comportant au moins une pompe,
∘ Une première liaison fluidique (53) reliant ladite deuxième sortie fluidique via une première vanne fluidique (V1) dudit réseau fluidique à l'ensemble de pompage (EP),
∘ Un premier réservoir de collecte (R1) muni d'un premier évent et connecté à l'ensemble de pompage (EP) via une deuxième liaison fluidique (54) commandée par une deuxième vanne fluidique (V2) du réseau,
∘ Un deuxième réservoir de collecte (R2) muni d'un deuxième évent et connecté à l'ensemble de pompage (EP) via une troisième liaison fluidique (56) commandée par une troisième vanne fluidique (V3) du réseau
∘ Ladite au moins une pompe comprenant une cavité qui présente un volume qui correspond à un volume unitaire du volume calibré à obtenir dans le deuxième réservoir de collecte (R2).

2. Dispositif selon la revendication 1, **caractérisé en ce que** ledit organe de connexion comporte une première aiguille (100) présentant un premier canal interne entre ladite première entrée fluidique et ladite première sortie fluidique et une extrémité libre contondante (101).

3. Dispositif selon la revendication 2, **caractérisé en ce que** les moyens de libération de l'échantillon sanguin opèrent par gravité et **en ce qu'**ils comportent une deuxième aiguille (104) présentant une extrémité libre contondante et un deuxième canal interne relié à une première ouverture (105) réalisée sur la carte, une deuxième ouverture (108) réalisée sur la carte étant reliée audit premier canal interne de ladite première aiguille (100).

4. Dispositif selon la revendication 3, **caractérisé en ce que** ladite première ouverture et ladite deuxième ouverture sont chacune recouvertes d'un filtre hydrophobe (107, 110).

5. Dispositif selon l'une des revendications 1 à 4, **caractérisé en ce que** l'ensemble de pompage (EP) comporte une seule pompe (5) et **en ce que** le premier réservoir de collecte (R1) et le deuxième réservoir de collecte (R2) sont reliés en parallèle à ladite pompe (5) respectivement via la deuxième liaison fluidique (54) et via la troisième liaison fluidique (56).

6. Dispositif selon la revendication 5, **caractérisé en ce que** la pompe (5) comporte une membrane (50) déformable séparant de manière étanche sa cavité en un premier volume (51) destiné à être connecté à un point de commande pneumatique et un deuxième volume (52) dans lequel débouche une ou plusieurs desdites liaisons fluidiques.

7. Dispositif selon l'une des revendications 1 à 4, **caractérisé en ce que** l'ensemble de pompage (EP) comporte deux pompes, une première pompe (5A) reliée par la première liaison fluidique (53) à la deuxième sortie fluidique et au premier réservoir de collecte (R1) par la deuxième liaison fluidique (54) et une deuxième pompe (5B) reliée par une quatrième liaison fluidique (57) au premier réservoir de collecte (R1) via une quatrième vanne fluidique (V4) et au deuxième réservoir de collecte (R2) par la troisième liaison fluidique (56).

8. Dispositif selon la revendication 7, **caractérisé en ce que** le module (M3) d'obtention d'un volume calibré de plasma sanguin comporte une cinquième liaison fluidique (58) reliant directement ladite première pompe (5A) audit deuxième réservoir de collecte (R2) et commandée par une cinquième vanne fluidique (V5).

9. Dispositif selon la revendication 7 ou 8, **caractérisé en ce que** chaque pompe (5, 5A, 5B) comporte une membrane (50) déformable séparant de manière étanche leur cavité en un premier volume (51) destiné à être connecté à un point de commande pneumatique et un deuxième volume (52) dans lequel débouche une ou plusieurs desdites liaisons fluidiques.

10. Dispositif selon la revendication 9, **caractérisé en ce que** la cavité de ladite deuxième pompe (5B) présente un volume qui correspond à un volume unitaire du volume calibré à obtenir dans le deuxième réservoir de collecte (R2).

11. Dispositif selon l'une des revendication 1 à 10, **caractérisé en ce que** la carte (10) comporte une deuxième cavité (103) agencée sous ladite membrane séparative (4) et agencée entre la première sortie fluidique et la deuxième entrée fluidique.

12. Dispositif selon l'une des revendications 1 à 112, **caractérisé en ce que** le deuxième réservoir de collecte (R2) comporte plusieurs chambres fluidiques agencées en parallèle.

13. Système de préparation d'un volume calibré de plasma sanguin, **caractérisé en ce qu'**il comporte :
- un dispositif de préparation d'un échantillon sanguin tel que défini dans l'une des revendications 1 à 12,
- un système d'actionnement pneumatique (SP) comprenant au moins un point de commande pneumatique connecté à l'ensemble de pompage et plusieurs points de commande pneumatiques connectés chacun à une vanne fluidique distincte du réseau fluidique,
- une unité de traitement et de commande (UC) dudit système d'actionnement pneumatique (SP), configurée pour exécuter une séquence de commande adaptée pour obtenir un volume calibré de plasma sanguin.

14. Système selon la revendication 13, **caractérisé en ce qu'**il comporte une pompe (3) connectée sur ledit dispositif et reliée à ladite première entrée fluidique pour aspirer l'échantillon sanguin (ECH) dans ledit dispositif.

15. Procédé de commande mis en œuvre dans une unité de commande pour obtenir un échantillon de volume calibré de plasma sanguin à partir d'un échantillon sanguin (ECH) présent dans un dispositif de prélèvement connecté sur le dispositif de préparation d'un échantillon sanguin inclus dans le système qui est défini dans l'une des revendication 13 ou 14, ledit procédé étant **caractérisé en ce qu'**il comporte une séquence de commande ayant les étapes suivantes :
a) Commande d'ouverture de la première vanne fluidique (V1), de fermeture de la deuxième vanne fluidique (V2) et de fermeture de la troisième vanne fluidique (V3),
b) Commande de l'ensemble de pompage pour aspiration dudit échantillon sanguin à travers ladite membrane séparative (4),
c) Commande de fermeture de la première vanne fluidique (V1) et d'ouverture de la deuxième vanne fluidique (V2),
d) Commande de l'ensemble de pompage (EP) pour remplissage au moins partiel dudit premier réservoir de collecte (R1),
e) Mise en œuvre des étapes a) à d) jusqu'à remplissage au moins partiel du premier réservoir de collecte (R1),
f) Commande d'ouverture de la deuxième vanne fluidique (V2) et de fermeture de la troisième vanne fluidique (V3),
g) Commande de l'ensemble de pompage (EP) pour aspiration dudit plasma sanguin contenu dans le premier réservoir de collecte (R1),
h) Commande de fermeture de la deuxième vanne fluidique (V2) et d'ouverture de la troisième vanne fluidique (V3),
i) Commande de l'ensemble de pompage (EP) pour remplissage du deuxième réservoir de collecte (R2),
j) Mise en œuvre des étapes f) à i) jusqu'à obtenir le volume calibré souhaité dans le deuxième réservoir de collecte (R2).

## Patentansprüche

1. Vorrichtung (1) zur Herstellung eines kalibrierten Volumens von Blutplasma aus einer Blutprobe (ECH), **dadurch gekennzeichnet, dass** sie aufweist:
- eine Karte (10), die ein Fluidnetz (RF) umfasst,
- mehrere auf der Karte angeordnete Module, die ein Modul (M1) zum Fluidanschluss, ein Modul (M2) zur Abtrennung des in der Blutprobe (ECH) enthaltenen Blutplasmas und ein Modul (M3) zur Gewinnung eines kalibrierten Volumens von nach der Abtrennung gewonnenem Blutplasma umfassen,
- wobei das Modul (M1) zum Fluidanschluss umfasst:
∘ wenigstens ein Fluidanschlussorgan, welches dazu eingerichtet ist, eine Vorrichtung zur Entnahme einer Blutprobe anzuschließen, und welches einen ersten Fluideinlass des Fluidnetzes aufweist, über welchen die entnommene Blutprobe eingeleitet wird,
∘ einen ersten Fluidauslass des Fluidnetzes, der mit dem ersten Fluideinlass verbunden ist,
∘ Mittel zur Freigabe der Blutprobe durch den ersten Fluideinlass hindurch,
- wobei das Modul (M2) zur Abtrennung des in der Blutprobe (ECH) enthaltenen Blutplasmas umfasst:
∘ eine in der Karte ausgebildete Kammer,
∘ eine Trennmembran (4), welche die Kammer in einen ersten Raum (103) und einen zweiten Raum (112) aufteilt,
∘ wenigstens einen zweiten Fluideinlass des Fluidnetzes, der mit dem ersten Fluidauslass des Anschlussmoduls (M1) verbunden ist und in den ersten Raum der Kammer mündet,
∘ einen zweiten Fluidauslass des Fluidnetzes, der in den zweiten Raum der Kammer mündet,
- wobei das Modul (M3) zur Gewinnung eines kalibrierten Volumens von nach der Abtrennung gewonnenem Blutplasma umfasst:
∘ wenigstens eine Fluidpumpanordnung (EP), die wenigstens eine Pumpe aufweist,
∘ eine erste Fluidverbindung (53), die den zweiten Fluidauslass über ein erstes Fluidventil (V1) des Fluidnetzes mit der Pumpanordnung (EP) verbindet,
∘ einen ersten Sammelbehälter (R1), der mit einer ersten Luftöffnung versehen ist und mit der Pumpanordnung (EP) über eine zweite Fluidverbindung (54) verbunden ist, die von einem zweiten Fluidventil (V2) des Netzes gesteuert wird,
∘ einen zweiten Sammelbehälter (R2), der mit einer zweiten Luftöffnung versehen ist und mit der Pumpanordnung (EP) über eine dritte Fluidverbindung (56) verbunden ist, die von einem dritten Fluidventil (V3) des Netzes gesteuert wird,
∘ wobei die wenigstens eine Pumpe einen Hohlraum umfasst, welcher ein Volumen aufweist, das einer Volumeneinheit des zu gewinnenden kalibrierten Volumens in dem zweiten Sammelbehälter (R2) entspricht.

2. Vorrichtung nach Anspruch 1, **dadurch gekennzeichnet, dass** das Anschlussorgan eine erste Nadel (100) umfasst, die einen ersten inneren Kanal zwischen dem ersten Fluideinlass und dem ersten Fluidauslass und ein stumpfes freies Ende (101) aufweist.

3. Vorrichtung nach Anspruch 2, **dadurch gekennzeichnet, dass** die Mittel zur Freigabe der Blutprobe auf Schwerkraftbasis funktionieren, und dadurch, dass sie eine zweite Nadel (104) umfassen, die ein stumpfes freies Ende und einen zweiten inneren Kanal, der mit einer auf der Karte ausgebildeten ersten Öffnung (105) verbunden ist, aufweist, wobei eine auf der Karte ausgebildete zweite Öffnung (108) mit dem ersten inneren Kanal der ersten Nadel (100) verbunden ist.

4. Vorrichtung nach Anspruch 3, **dadurch gekennzeichnet, dass** die erste Öffnung und die zweite Öffnung jeweils mit einem hydrophoben Filter (107, 110) bedeckt sind.

5. Vorrichtung nach einem der Ansprüche 1 bis 4, **dadurch gekennzeichnet, dass** die Pumpanordnung (EP) eine einzige Pumpe (5) umfasst, und dadurch, dass der erste Sammelbehälter (R1) und der zweite Sammelbehälter (R2) über die zweite Fluidverbindung (54) bzw. über die dritte Fluidverbindung (56) parallel mit der Pumpe (5) verbunden sind.

6. Vorrichtung nach Anspruch 5, **dadurch gekennzeichnet, dass** die Pumpe (5) eine verformbare Membran (50) umfasst, welche ihren Hohlraum auf dichte Weise in ein erstes Volumen (51), das dazu bestimmt ist, mit einem Punkt zur pneumatischen Steuerung verbunden zu werden, und ein zweites Volumen (52), in welches eine oder mehrere der Fluidverbindungen münden, aufteilt.

7. Vorrichtung nach einem der Ansprüche 1 bis 4, **dadurch gekennzeichnet, dass** die Pumpanordnung (EP) zwei Pumpen umfasst, eine erste Pumpe (5A), die über die erste Fluidverbindung (53) mit dem zweiten Fluidauslass und über die zweite Fluidverbindung (54) mit dem ersten Sammelbehälter (R1) verbunden ist, und eine zweite Pumpe (5B), die über eine vierte Fluidverbindung (57) mit dem ersten Sammelbehälter (R1) über ein viertes Fluidventil (V4) und mit dem zweiten Sammelbehälter (R2) über die dritte Fluidverbindung (56) verbunden ist.

8. Vorrichtung nach Anspruch 7, **dadurch gekennzeichnet, dass** das Modul (M3) zur Gewinnung eines kalibrierten Volumens von Blutplasma eine fünfte Fluidverbindung (58) umfasst, welche die erste Pumpe (5A) direkt mit dem zweiten Sammelbehälter (R2) verbindet und von einem fünften Fluidventil (V5) gesteuert wird.

9. Vorrichtung nach Anspruch 7 oder 8, **dadurch gekennzeichnet, dass** jede Pumpe (5, 5A, 5B) eine verformbare Membran (50) umfasst, welche ihren Hohlraum auf dichte Weise in ein erstes Volumen (51), das dazu bestimmt ist, mit einem Punkt zur pneumatischen Steuerung verbunden zu werden, und ein zweites Volumen (52), in welches eine oder mehrere der Fluidverbindungen münden, aufteilt.

10. Vorrichtung nach Anspruch 9, **dadurch gekennzeichnet, dass** der Hohlraum der zweiten Pumpe (5B) ein Volumen aufweist, welches einer Volumeneinheit des zu gewinnenden kalibrierten Volumens in dem zweiten Sammelbehälter (R2) entspricht.

11. Vorrichtung nach einem der Ansprüche 1 bis 10, **dadurch gekennzeichnet, dass** die Karte (10) einen zweiten Hohlraum (103) umfasst, der unter der Trennmembran (4) angeordnet ist und zwischen dem ersten Fluidauslass und dem zweiten Fluideinlass angeordnet ist.

12. Vorrichtung nach einem der Ansprüche 1 bis 11, **dadurch gekennzeichnet, dass** der zweite Sammelbehälter (R2) mehrere parallel angeordnete Fluidkammern umfasst.

13. System zur Herstellung eines kalibrierten Volumens von Blutplasma, **dadurch gekennzeichnet, dass** es umfasst:
- eine Vorrichtung zur Herstellung einer Blutprobe, wie in einem der Ansprüche 1 bis 12 definiert,
- ein pneumatisches Betätigungssystem (SP), das wenigstens einen Punkt zur pneumatischen Steuerung, der mit der Pumpanordnung verbunden ist, und mehrere Punkte zur pneumatischen Steuerung, die jeweils mit einem anderen Fluidventil des Fluidnetzes verbunden sind, umfasst,
- eine Verarbeitungs- und Steuereinheit (UC) des pneumatischen Betätigungssystems (SP), die dafür ausgelegt ist, eine Steuersequenz auszuführen, die geeignet ist, ein kalibriertes Volumen von Blutplasma zu gewinnen.

14. System nach Anspruch 13, **dadurch gekennzeichnet, dass** es eine Pumpe (3) umfasst, die an die Vorrichtung angeschlossen ist und mit dem ersten Fluideinlass verbunden ist, um die Blutprobe (ECH) in die Vorrichtung zu saugen.

15. Steuerungsverfahren, welches in einer Steuereinheit durchgeführt wird, zum Gewinnen einer Probe mit einem kalibrierten Volumen von Blutplasma aus einer Blutprobe (ECH), die in einer Vorrichtung zur Entnahme vorhanden ist, die an die Vorrichtung zur Herstellung einer Blutprobe angeschlossen ist, die in dem System enthalten ist, welches in einem der Ansprüche 13 oder 14 definiert ist, wobei das Verfahren **dadurch gekennzeichnet ist, dass** es eine Steuersequenz umfasst, welche die folgenden Schritte aufweist:
a) Steuerung des Öffnens des ersten Fluidventils (V1), des Schließens des zweiten Fluidventils (V2) und des Schließens des dritten Fluidventils (V3),
b) Steuerung der Pumpanordnung zur Ansaugung der Blutprobe durch die Trennmembran (4) hindurch,
c) Steuerung des Schließens des ersten Fluidventils (V1) und des Öffnens des zweiten Fluidventils (V2),
d) Steuerung der Pumpanordnung (EP) zum wenigstens teilweisen Füllen des ersten Sammelbehälters (R1),
e) Ausführung der Schritte a) bis d) bis zum wenigstens teilweisen Füllen des ersten Sammelbehälters (R1),
f) Steuerung des Öffnens des zweiten Fluidventils (V2) und des Schließens des dritten Fluidventils (V3),
g) Steuerung der Pumpanordnung (EP) zur Ansaugung des im ersten Sammelbehälter (R1) enthaltenen Blutplasmas,
h) Steuerung des Schließens des zweiten Fluidventils (V2) und des Öffnens des dritten Fluidventils (V3),
i) Steuerung der Pumpanordnung (EP) zum Füllen des zweiten Sammelbehälters (R2),
j) Ausführung der Schritte f) bis i) bis zum Gewinnen des gewünschten kalibrierten Volumens im zweiten Sammelbehälter (R2).

## Claims

1. Device (1) for preparing a calibrated volume of blood plasma from a blood sample (ECH), **characterized in that** it comprises:
- a card (10) comprising a fluidic network (RF),
- a plurality of modules arranged on the card, comprising a fluidic connection module (M1), a module (M2) for separation of the blood plasma contained in said blood sample (ECH) and a module (M3) for obtaining a calibrated volume of blood plasma obtained after separation,
- said fluidic connection module (M1), comprising:
∘ at least one fluidic connection member which is adapted to connect a device for taking a blood sample and which comprises a first fluidic inlet of said fluidic network via which the blood sample taken is introduced,
∘ a first fluidic outlet of said fluidic network connected to said first fluidic inlet,
∘ means for releasing the blood sample via said first fluidic inlet,
- said module (M2) for separation of the blood plasma contained in said blood sample (ECH), comprising:
∘ a chamber formed in the card,
∘ a separation membrane (4) separating said chamber into a first space (103) and a second space (112),
∘ at least a second fluidic inlet of said fluidic network connected to said first fluidic outlet of the connection module (M1) and opening out into the first space of the chamber,
∘ a second fluidic outlet of said fluidic network opening out into said second space of the chamber,
- said module (M3) for obtaining a calibrated volume of blood plasma obtained after separation, comprising:
∘ at least one fluidic pumping assembly (EP) comprising at least one pump,
∘ a first fluidic link (53) connecting said second fluidic outlet via a first fluidic valve (V1) of said fluidic network to the pumping assembly (EP),
∘ a first collection reservoir (R1) provided with a first vent and connected to the pumping assembly (EP) via a second fluidic link (54) commanded by a second fluidic valve (V2) of the network,
∘ a second collection reservoir (R2) provided with a second vent and connected to the pumping assembly (EP) via a third fluidic link (56) commanded by a third fluidic valve (V3) of the network,
∘ said at least one pump comprising a cavity that has a volume that corresponds to a unit volume of the calibrated volume to be obtained in the second collection reservoir (R2).

2. Device according to Claim 1, **characterized in that** said connection member comprises a first needle (100) having a first internal channel between said first fluidic inlet and said first fluidic outlet and a blunt free end (101).

3. Device according to Claim 2, **characterized in that** the means for releasing the blood sample operate via gravity and **in that** they comprise a second needle (104) having a blunt free end and a second internal channel connected to a first opening (105) formed on the card, a second opening (108) formed on the card being connected to said first internal channel of said first needle (100).

4. Device according to Claim 3, **characterized in that** said first opening and said second opening are each covered with a hydrophobic filter (107, 110).

5. Device according to one of Claims 1 to 4, **characterized in that** the pumping assembly (EP) comprises a single pump (5) and **in that** the first collection reservoir (R1) and the second collection reservoir (R2) are connected in parallel to said pump (5) respectively via the second fluidic link (54) and via the third fluidic link (56).

6. Device according to Claim 5, **characterized in that** the pump (5) comprises a deformable membrane (50) separating its cavity in a leaktight manner into a first volume (51) designed to be connected to a pneumatic command point and a second volume (52) into which one or more of said fluidic links open out.

7. Device according to one of Claims 1 to 4, **characterized in that** the pumping assembly (EP) comprises two pumps, a first pump (5A) connected via the first fluidic link (53) to the second fluidic outlet and to the first collection reservoir (R1) via the second fluidic link (54) and a second pump (5B) connected via a fourth fluidic link (57) to the first collection reservoir (R1) via a fourth fluidic valve (V4) and to the second collection reservoir (R2) via the third fluidic link (56).

8. Device according to Claim 7, **characterized in that** the module (M3) for obtaining a calibrated volume of blood plasma comprises a fifth fluidic link (58) directly connecting said first pump (5A) to said second collection reservoir (R2) and commanded by a fifth fluidic valve (V5).

9. Device according to Claim 7 or 8, **characterized in that** each pump (5, 5A, 5B) comprises a deformable membrane (50) separating the cavity thereof in a leaktight manner into a first volume (51) designed to be connected to a pneumatic command point and a second volume (52) into which one or more of said fluidic links open out.

10. Device according to Claim 9, **characterized in that** the cavity of said second pump (5B) has a volume that corresponds to a unit volume of the calibrated volume to be obtained in the second collection reservoir (R2).

11. Device according to one of Claims 1 to 10, **characterized in that** the card (10) comprises a second cavity (103) arranged under said separation membrane (4) and arranged between the first fluidic outlet and the second fluidic inlet.

12. Device according to one of Claims 1 to 11, **characterized in that** the second collection reservoir (R2) comprises a plurality of fluidic chambers arranged in parallel.

13. System for preparing a calibrated volume of blood plasma, **characterized in that** it comprises:
- a device for preparing a blood sample as defined in one of Claims 1 to 12,
- a pneumatic actuation system (SP) comprising at least one pneumatic command point connected to the pumping assembly and a plurality of pneumatic command points each connected to a distinct fluidic valve of the fluidic network,
- a treatment and command unit (UC) of said pneumatic actuation system (SP) configured such as to execute a command sequence adapted to obtain a calibrated volume of blood plasma.

14. System according to Claim 13, **characterized in that** it comprises a pump (3) connected to said device and connected to said first fluidic inlet to aspirate the blood sample (ECH) into said device.

15. Control method implemented in a command unit for obtaining a sample of calibrated volume of blood plasma from a blood sample (ECH) in a sampling device connected to the device for preparing a blood sample which is included in the system defined in one of Claims 13 or 14, said method being **characterized in that** it comprises a control sequence having the following steps:
a) Controlling the opening of the first fluidic valve (V1), the closing of the second fluidic valve (V2) and the closing of the third fluidic valve (V3).
b) Controlling the pumping assembly for aspiration of said blood sample through said separation membrane (4),
c) Controlling the closing of the first fluidic valve (V1) and the opening of the second fluidic valve (V2),
d) Controlling the pumping assembly (EP) for at least partial filling of said first collection reservoir (R1),
e) Implementing steps a) to d) up to at least partial filling of the first collection reservoir (R1),
f) Controlling the opening of the second fluidic valve (V2) and the closing of the third fluidic valve (V3),
g) Controlling the pumping assembly (EP) for aspiration of said blood plasma contained in the first collection reservoir (R1),
h) Controlling the closure of the second fluidic valve (V2) and the opening of the third fluidic valve (V3),
i) Controlling the pumping assembly (EP) for filling the second collection reservoir (R2),
j) Implementing steps f) to i) up to obtaining the desired calibrated volume in the second collection reservoir (R2).
